# EUROPEAN PATENT APPLICATION

(11) **EP 3 905 174 A1**
(43) Date of publication of application: **03.11.2021**
(21) Application number: 19906268.8
(22) Date of filing: 13.12.2019
(51) Int. Cl.: G06Q 20/40

(54) **METHOD AND DEVICE FOR AUTHENTICATING NEAR-FIELD INFORMATION, ELECTRONIC APPARATUS, AND COMPUTER STORAGE MEDIUM**

(30) Priority: 26.12.2018 CN 201811608291
(71) Applicant: Xunteng (Guangdong) Technology Co., Ltd., Guangzhou, Guangdong 510000 (CN)
(72) Inventor: JIAN, Weiming, Guangzhou, Guangdong 510000 (CN); PI, Aiping, Guangzhou, Guangdong 510000 (CN); LIANG, Huagui, Guangzhou, Guangdong 510000 (CN); HUANG, Feiying, Guangzhou, Guangdong 510000 (CN); CHEN, Qiurong, Guangzhou, Guangdong 510000 (CN)
(74) Representative: Schulz Junghans Patentanwälte PartGmbB
(86) International application number: PCT/CN2019/125378
(87) International publication number: WO 2020/135115

(57) **Abstract**

A method and device for authenticating near-field information, an electronic apparatus, and a computer storage medium. The method comprises: acquiring current location information of an object requiring authentication, and further determining a target raster region in which the object is located (S102); receiving an information authentication request sent by a target service terminal within the target raster region (S104); determining, from a first relationship table associated with the target raster region, and according to information of the target service terminal, valid users of the target service terminal, and determining biometric information of the respective valid users (S106); and performing identity authentication according to live biometric information of the object and the biometric information of the respective valid users (S108). In the method, authentication of information of an object requiring authentication is performed on the basis of live biometric information of the object, and thus a user does not need to produce a physical identity card, thereby simplifying an information authentication process, and improving user experience during information authentication. The current location information of the object is sent to a server only when the object is within a preset range of a business authorized thereby, so as to ensure location privacy of the user.

## Description

### Cross-references to Related Applications

This application claims priority of Chinese Patent Application No. CN201811608291.7, titled "A Method for Near-Field Information Authentication, and Device, Electronic Equipment and Computer Storage Medium therefor", filed with the Chinese Patent Office on 26 December 2018, the entire content of which is incorporated by reference in this application.

### Technical Field

This application relates to the technical field of information authentication, in particular to a method for near-field information authentication, and device, electronic equipment and computer storage medium therefor.

### Technical Background

With continuous developments of network technology and automated device technology, various areas and departments including banks, electronic taxation, electronic police matters, electronic vehicle management offices, airports, high-speed railway stations and hotels etc., a variety of electronic self-service terminals are constantly being developed and used, which not only saves operating expenses, but also improves work efficiency, that is, increases the convenience of the people handling matters.

However, when handling service, it is often necessary to show a physical identification card. In today's electronic age, it is impossible to handle various services without an identification card, which will inevitably affect people's travel.

In summary, existing methods of information authentication through physical identification cards are poor in practicability and convenience.

### Summary of the Invention

In view of this, the purpose of this application is to provide a method for near-field information authentication, and device, electronic equipment and computer storage medium therefor to alleviate the technical problems of poor practicability and poor convenience of the existing information authentication methods.

In a first aspect, an embodiment of the present application provides a method for near-field information authentication method for a near-field information authentication, characterized in that, the method is applied to a server and comprising: obtaining a current location information of an object to be authenticated, then determining a target grid area where the object to be authenticated is located, wherein when the object to be authenticated is within a preset range of its authorized merchants, a user terminal of the object to be authenticated periodically sends the current location information of the object to be authenticated to the server; receiving an information authentication request sent by a target service terminal in the target grid area, wherein the information authentication request carries information of the target service terminal and live biological characteristic information of the object to be authenticated; the information of the target service terminal comprises: authorized sub-merchants to which the target service terminal belongs, a number of the target service terminal and a location information of the target service terminal, the target service terminal is a service terminal that performs information authentication on the object to be authenticated; determining effective users of the target service terminal in a first relationship table of the target grid area according to the information of the target service terminal, and determining biological characteristic information of each valid user; the first relationship table is a relationship table between user accounts of authorized merchants and their valid users in the target grid area, and the first relationship table is a dynamically changing relationship table; according to the live biological characteristic information of the object to be authenticated and the biological characteristic information of each valid user, completing the information authentication of the object to be authenticated, and obtaining an information authentication result.

Further, the step of obtaining the current location information of the object to be authenticated comprises: determining the authorized merchants of the object to be authenticated, wherein the authorized merchants are merchants after the object to be authenticated performs an authorized operation on the merchants through its user terminal, the authorized merchants comprises at least one authorized sub-merchant; sending location information of each authorized sub-merchant to the user terminal of the object to be authenticated, so that the user terminal of the object to be authenticated determines whether the location information of its location and the location information of each authorized sub-merchant are within the preset range; when the user terminal of the object to be authenticated determines that the location information of its location and the location information of the authorized sub-merchants are within the preset range, obtaining a current location information of the user terminal, and using the current location information of the user terminal as the current location information of the object to be authenticated.

Further, after obtaining the current location information of the object to be authenticated, before receiving the information authentication request sent by the target service terminal in the target grid area, the method further comprises: establishing a relationship between the authorized sub-merchant of the object to be authenticated and the user account of the object to be authenticated in the first relationship table.

Further, the step of determining the effective users of the target service terminal in the first relationship table of the target grid area according to the information of the target service terminal comprises: obtaining the first relationship table of the target grid area; determining a first target relationship table of the authorized sub-merchant to which the target service terminal belongs in the first relationship table in the target grid area; obtaining the user account included in the first target relationship table, and using the user account included in the first target relationship table as a valid user account; using a user corresponding to the valid user account as the valid user of the target service terminal.

Further, the step of, according to the live biological characteristic information of the object to be authenticated and the biological characteristic information of each valid user, completing the information authentication of the object to be authenticated comprises: determining whether the live biological characteristic information of the object to be authenticated is directly derived from a real live body; if yes, matching the biological characteristic information of the object to be authenticated with the biological characteristic information of each valid user; determining, according to a matching result, whether there is target biological characteristic information that matches the live biological characteristic information of the object to be authenticated in the biological characteristic information of each valid user; if it exists, determining whether the target biological characteristic information is unique; if it is unique, determining a valid user corresponding to the target biological characteristic information as the object to be authenticated, and completing the information authentication of the object to be authenticated.

Further, the method further comprises: if it is not unique, performing the information authentication based on the location information of each valid user corresponding to the target biological characteristic information.

Further, the step of performing the information authentication based on the location information of each valid user corresponding to the target biological characteristic information comprises: comparing the location information of each valid user corresponding to the target biological characteristic information with the location information of the target service terminal; determining whether an effective user closest to the location information of the target service terminal is unique based on the comparison result; if it is unique, determining the effective user who is closest to the location information of the target service terminal as the object to be authenticated, and completing the information authentication of the object to be authenticated.

Further, the method further comprises: if it is not unique, sending an information authentication request to the user terminal of each valid user closest to the location information of the target service terminal; when receiving confirmation information sent by each valid user closest to the location information of the target service terminal based on the information authentication request, determining the confirmation information to obtain a determination result; completing the information authentication of the object to be authenticated according to the determination result.

Further, when the information authentication is a payment information authentication, the information authentication result is a payment information authentication result, and the payment information authentication result comprises a user account of the object to be authenticated; after completing the information authentication of the object to be authenticated, the method further comprises: sending the payment information authentication result and a service request to a payment system, so that the payment system searches for a payment account corresponding to the user account in the payment information authentication result, and completing a payment operation based on the payment account and the service request; generating an invoice service request according to information of completing the payment operation, and sending the invoice service request to an invoice system, so that the invoice system generates an electronic payment invoice according to the invoice service request, and sending the electronic payment invoice to a user designated email address or to the target service terminal.

Further, when the information authentication is an identity information authentication, the information authentication result is an identity information authentication result, and the identity information authentication result comprises a user account of the object to be authenticated; after completing the information authentication of the object to be authenticated, the method further comprises: sending the identity information authentication result and a service request to an identity authentication system, so that the identity authentication system converts the user account in the identity information authentication result into personal identity information, and completing the identity information authentication according to the personal identity information and the service request.

Further, before determining the authorized merchant of the object to be authenticated, the method further comprises: obtaining a merchant authorization request sent by the object to be authenticated through its user terminal, wherein the merchant authorization request is a request generated by the object to be authenticated after setting a near-field function for the merchant on its user terminal, and the merchant authorization request carries the merchant information; based on the merchant authorization request, completing an authorization of the merchant corresponding to the merchant authorization request by the object to be authenticated; and obtaining location information of all sub-merchants of the merchant.

Further, the method further comprises: receiving information of leaving the preset range sent by the user terminal of the object to be authenticated; deleting record information about the user account of the object to be authenticated in the first relationship table according to the information of leaving the preset range.

Further, the method further comprises: if the current location information of the user terminal of the object to be authenticated is not obtained within the preset time, and record information of the user account of the object to be authenticated exists in the first relationship table, then deleting the record information of the user account of the object to be authenticated in the first relationship table.

Further, the method further comprises: obtaining information of the service terminal sent by the service terminal, wherein the information of the service terminal comprises: the sub-merchant to which the service terminal belongs, the number of the service terminal, and the location of the service terminal; establishing a second relationship table between serial numbers of the sub-merchant and the service terminal in a grid area corresponding to the sub-merchant to which the service terminal belongs according to the information of the service terminal, and the second relationship table is a dynamically changing relationship table.

Further, the method further comprises: when the biological characteristic information of the object to be authenticated is facial biological characteristic information, the facial biological characteristic information is biological characteristic information of a live human face of the object to be authenticated, and the biological characteristic information of the live human face comprises any one of the following form: the biological characteristic information of the live human face comprises expression information of the object to be authenticated, the biological characteristic information of the live human face does not comprise the expression information of the object to be authenticated.

In a second aspect, an embodiment of the present application also provides a device for a near-field information authentication, characterized in that, the device is applied to a server and comprising: an obtaining module configured to obtain a current location information of an object to be authenticated, then determining a target grid area where the object to be authenticated is located, wherein when the object to be authenticated is within a preset range of its authorized merchants, a user terminal of the object to be authenticated periodically sends the current location information of the object to be authenticated to the server; a receiving module configured to receive an information authentication request sent by a target service terminal in the target grid area, wherein the information authentication request carries information of the target service terminal and live biological characteristic information of the object to be authenticated; the information of the target service terminal comprises: authorized sub-merchants to which the target service terminal belongs, a number of the target service terminal and a location information of the target service terminal, the target service terminal is a service terminal that performs information authentication on the object to be authenticated; a determining module configured to determine effective users of the target service terminal in a first relationship table of the target grid area according to the information of the target service terminal, and determining biological characteristic information of each valid user; the first relationship table is a relationship table between user accounts of authorized merchants and their valid users in the target grid area, and the first relationship table is a dynamically changing relationship table; an information authentication module configured to, according to the live biological characteristic information of the object to be authenticated and the biological characteristic information of each valid user, complete the information authentication of the object to be authenticated, and obtaining an information authentication result.

In a third aspect, an embodiment of the present application also provides an electronic device comprising a memory, a processor, and a computer program stored on the memory capable of running on the processor, characterized in that, the processor executes the computer program to implement the steps of the method described in any one of the above-mentioned first aspect.

In a fourth aspect, an embodiment of the present application also provides a computer-readable medium with non-volatile program code executable by a processor, characterized in that, the program code causes the processor to execute the method described in any one of the above-mentioned first aspect.

In one embodiment of the present application, first obtaining the current location information of the object to be authenticated, then determining the target grid area where the object to be authenticated is located; then, receiving the information authentication request sent by the target service terminal in the target grid area; further, determining the effective user of the target service terminal in the first relationship table in the target grid area according to the information of the target service terminal, and determining the biological characteristic information of each valid user; finally, according to the live body biological characteristic information of the object to be authenticated and each valid user, completing the information authentication of the object to be authenticated to obtain the information authentication result From the above description, it can be seen that in this embodiment, when information authentication is performed on the object to be authenticated, it is achieved through the biological information of the object to be authenticated, and the user does not need to provide a physical identification card, which facilitates the user's travel, simplifying the information authentication process, and improving the user experience of the user when performing information authentication; in addition, only when the object to be authenticated is within the preset range of its authorized merchant, the current location information of the object to be authenticated is sent to the server to ensure the user location privacy and security; reducing the number of biological characteristic identification, improving the accuracy of identification, reducing the rate of misrecognition, and reducing the investment in hardware equipment; at the same time, the use of live body biological characteristic information for information authentication may improve the accuracy of information authentication, with good practicability to alleviate the technical problems of poor practicability and poor convenience of existing information authentication methods.

Other features and advantages of the present application will be described in the following description, and partly become clear from the description, or understood by implementing the present application. The purpose and other advantages of the application are realized and obtained by the structures specifically pointed out in the description, claims and drawings.

In order to make the above-mentioned objectives, features and advantages of the present application clearer and understandable, the preferred embodiments and accompanying drawings are described in detail as follows.

### Description of the Figures

In order to more clearly illustrate the specific embodiments of the application or the technical solutions in the prior art, the following will briefly introduce the figures that need to be used in the description of the specific embodiments or the prior art. Obviously, the figures in the following description are some embodiments of the present application. For those of ordinary skill in the art, other figures may be obtained based on these figures without any inventive work.
Figure 1 is a flowchart of a method for near-field information authentication provided by an embodiment of this application;
Figure 2 is a flowchart of a method for determining effective users of a target service terminal in a first relationship table of a target grid area according to information of the target service terminal according to an embodiment of the application;
Figure 3 is a flowchart of a method for information authentication based on live body biological characteristic information of the object to be authenticated and the biological characteristic information of each valid user according to an embodiment of the application;
Figure 4 is a flowchart of a method for performing information authentication based on location information of each valid user corresponding to target biological characteristic information according to an embodiment of the application;
Figure 5 is an illustrative diagram of facial expressions provided by an embodiment of the application;
Figure 6 is an illustrative diagram of expression feature points provided by an embodiment of this application;
Figure 7 is an illustrative diagram of a device for near-field information authentication provided by an

### embodiment of the application;

Figure 8 is an illustrative diagram of an electronic device provided by an embodiment of the application.

### Description

In order to make the purpose, technical solutions and advantages of the embodiments of this application clearer, the technical solutions of this application will be described clearly and completely in conjunction with the accompanying figures. Obviously, the described embodiments are part of the embodiments of this application, not all of the embodiments. Based on the embodiments in this application, all other embodiments obtained by those of ordinary skill in the art without inventive work shall fall within the protection scope of this application.

At present, identity authentication technology has been applied to many services such as mobile payment and identity recognition. In existing service processing, users are often required to provide physical credentials (including: resident identification cards, bank cards, Hong Kong and Macau passes etc.). The physical credentials are then read on the corresponding card reading device, and then identity verification is performed to complete the identity authentication task. The user's sense of experience is poor. If they forget to carry or lose their physical credentials, they will not be able to perform identity authentication, thereby failing to handle various services, which seriously affects the user's travel plan. Based on this, the embodiments of the application provide near-field identity authentication methods, devices, electronic equipment and computer storage media therefor, which may simplify the identity authentication process, improve the user experience of the user when performing identity authentication, facilitate the user's travel, and ensure the privacy and security of the user's location. In addition, it may improve the accuracy of identity authentication.

To facilitate the understanding of this embodiment, a method for near-field identity authentication disclosed in the embodiment of the present application is first introduced in detail.

### Embodiment 1

According to an embodiment of the present application, an embodiment of a method for near-field information authentication is provided. It should be noted that the steps shown in the flowchart of the accompanying figures may be executed in a computer system such as a set of computer-executable instructions. Further, although a logical sequence is shown in the flowchart, in some cases, the steps shown or described may be performed in a different order than here.

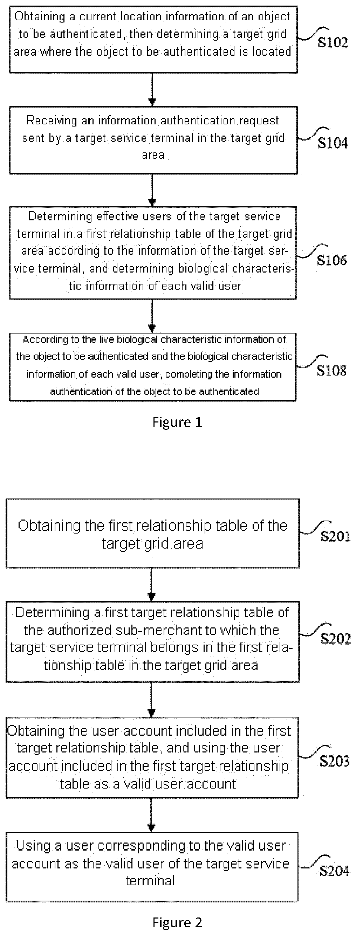

Figure 1 is a flowchart of a method for near-field information authentication according to an embodiment of the present application. As shown in Figure 1, the method comprises the following steps:
Step S102: obtaining a current location information of an object to be authenticated, then determining a target grid area where the object to be authenticated is located, wherein when the object to be authenticated is within a preset range of its authorized merchants, a user terminal of the object to be authenticated periodically sends the current location information of the object to be authenticated to the server;

In the embodiment of the present application, the execution body of the method may be a server. Specifically, it may be a service cloud.

In the actual implementation of the grid service cloud, a grid area can be divided into a certain area, and a grid server can be set for the divided grid area. Specifically, when the grid area is divided, the area of the divided grid area can be set according to actual conditions. If the population density in a certain area is high, then when dividing the grid area, the area of each divided grid area can be reduced; and if the population density in a certain area is sparse, then when dividing the grid area, the area of each grid area divided may be increased. When setting grid servers for divided grid areas, each grid area can correspond to one grid server, or multiple grid areas can correspond to one grid server, so as to improve the utilization of grid servers. The embodiments of the present application do not limit its specific implementation manner.

In the embodiment of this application, only when the object to be authenticated is within the preset range of its authorized merchant, the user terminal of the object to be authenticated will periodically send the current location information of the object to be authenticated to the grid service cloud (usually sent every 2 minutes, and the embodiments of the application do not specifically limit the duration of the period), and then the grid service cloud obtains the current location information of the object to be authenticated, and the target grid area and the corresponding grid server of the object to be authenticated can be determined according to the current location information of the object to be authenticated (as can be seen from the above content, there are authorized merchants authorized by the object to be authenticated in the target grid area).

Specifically, the user terminal of the object to be authenticated periodically sends the current position information of the object to be authenticated to the server based on one or more positioning technologies of BDS (BeiDou Navigation Satellite System), GPS (Global Positioning System), LBS (Location Based Service), AGPS (Assisted Global Positioning System), GSM (Global System for Mobile communications), IP (Internet Protocol) address positioning, WIFI (Wireless Fidelity, mobile hotspot) and gyroscope positioning etc. to, locate the position of the user terminal of the object to be authenticated, then obtain the current position information of the object to be authenticated.

It should be noted that the user terminal may be a mobile phone, or a notebook computer, a tablet computer, a smart watch, a smart bracelet, smart glasses, a smart earplug, a smart button type device etc. The embodiments of the present application do not specifically limit the foregoing user terminal, as long as it can achieve positioning and is convenient to carry.

Step S104: receiving an information authentication request sent by a target service terminal in the target grid area, wherein the information authentication request carries information of the target service terminal and live biological characteristic information of the object to be authenticated; the information of the target service terminal comprises: authorized sub-merchants to which the target service terminal belongs, a number of the target service terminal and a location information of the target service terminal, the target service terminal is a service terminal that performs information authentication on the object to be authenticated;

In the embodiment of the present application, the target service terminal may be a payment terminal and/or an identity authentication terminal. Specifically, payment terminals may include cash registers, POS (point of sale) machines, self-service payment machines, smart scanners, handheld devices, tablet computers, smart TVs, mobile phones, claw machines, game machines, and self-service payment machines, self-service recharge machines and smart payment equipment etc.; identity authentication terminals can include self-service terminals (e-government self-service terminals, e-banking self-service terminals, e-tax self-service terminals, hotel check-in self-service terminals, ATM (Automatic Teller Machine, automatic cash withdrawal) machines, queuing machines, number machines, self-service printing machines, self-service invoice machines, self-service ticket machines and self-service settlement machines etc.), shared equipment, intelligent robots, drones, identity authentication machines, member and VIP identification equipment, smart access control, smart video intercom equipment and smart gates etc. The embodiments of the present application do not specifically limit the foregoing target service terminal, and may also be other service terminals.

When the target service terminal in the target grid area handles the corresponding service, an information authentication request is generated. The information authentication request carries the information of the target service terminal and the live body biological characteristic information of the object to be authenticated. The information of the target service terminal includes: the authorized sub-merchant to which the target service terminal belongs, the number of the target service terminal (specifically, the ID of the target service terminal) and the location information of the target service terminal. The location information of the target service terminal can be obtained by any of the following methods: One or more positioning technologies of manual setting, BDS, GPS, LBS, AGPS, GSM, IP address, WIFI and gyroscope positioning etc. to locate the location of the target service terminal.

It should be noted that when any service terminal is installed in the merchant to which it belongs, it will be bound to the merchant to which it belongs. In order to facilitate a better understanding of the process, the following is an example: if the object to be authenticated authorizes Wal-Mart merchant, it will default to the object to be authenticated to all Wal-Mart branches (that is, the sub-merchants in this application). When a B POS machine is installed in a Wal-Mart A branch, the B POS machine will establish a binding relationship with Wal-Mart A branch.

In addition, the biological characteristic information can be one or more of biological characteristics such as human face, iris, sclera, eye print, palm vein, palm print, ear print, finger vein, and voice print etc. The biological characteristic collection structure and the pre-stored live body biological characteristic determination method collect the live body biological characteristic information of the object to be authenticated. Preferably, the face recognition technology can be selected to obtain the biological characteristic information of the object to be authenticated. Due to the current face recognition technology has reached an error rate of one in ten millions, the accuracy of identity recognition can be improved through the face recognition technology. With the use of live body face recognition technology, it can prevent others from using mobile phone images, videos, photos, masks and 3D (3 Dimensions) printed heads etc. to impersonate the objects to be authenticated, improving the security of information authentication. Further, in order to prevent users from their identities being stolen and scanned in unconscious situations such as normal, sleeping, coma, drunkenness, or even death, resulting in the loss of funds, facial recognition technology and facial gesture recognition technology can also be combined. The object to be authenticated can customize the expression required for identification based on their own preferences to prevent stolen funds; further, taking into account that there will be two people who look exactly the same when they are brothers, sisters, twins, or not related by blood, that is, human faces are not unique, despite the similar appearances, because the expressions are not the same, it can further prevent the identity of similar-looking users such as twins from being confused.

Step S106: determining effective users of the target service terminal in a first relationship table of the target grid area according to the information of the target service terminal, and determining biological characteristic information of each valid user; the first relationship table is a relationship table between user accounts of authorized merchants and their valid users in the target grid area, and the first relationship table is a dynamically changing relationship table;

Specifically, the first relationship table is a relationship table between each authorized merchant in the target grid area and the user account of the user who performs the authorized operation on it. For example, if the user who performs the authorization operation on the authorized merchant C is D, then the first relationship table contains the relationship between the authorized merchant C and the user account of the user D.

The first relationship table is a dynamically changing relationship table, and the dynamic change process of the first relationship table will be described in detail below, which will not be repeated here.

Because the information of the target service terminal includes the authorized sub-merchant to which the target service terminal belongs, it is possible to search for the valid user corresponding to the authorized sub-merchant, and specifically search for the valid user corresponding to the authorized sub-merchant in the first relationship table, and determine biological characteristic information of each valid user, wherein the effective user refers to the user authorized to the authorized sub-merchant.

Step S108: according to the live biological characteristic information of the object to be authenticated and the biological characteristic information of each valid user, completing the information authentication of the object to be authenticated, and obtaining an information authentication result.

Specifically, the live body biological characteristic information of the object to be authenticated is matched with the biological characteristic information of each valid user one by one, and the identity authentication of the object to be authenticated is completed according to the matching result. This process will be described in detail below, and will not be repeated here.

In one embodiment of the present application, first obtaining the current location information of the object to be authenticated, then determining the target grid area where the object to be authenticated is located; then, receiving the information authentication request sent by the target service terminal in the target grid area; further, determining the effective user of the target service terminal in the first relationship table in the target grid area according to the information of the target service terminal, and determining the biological characteristic information of each valid user; finally, according to the live body biological characteristic information of the object to be authenticated and each valid user, completing the information authentication of the object to be authenticated to obtain the information authentication result From the above description, it can be seen that in this embodiment, when information authentication is performed on the object to be authenticated, it is achieved through the biological information of the object to be authenticated, and the user does not need to provide a physical identification card, simplifying the information authentication process, and improving the user experience of the user when performing information authentication; in addition, only when the object to be authenticated is within the preset range of its authorized merchant, the current location information of the object to be authenticated is sent to the server to ensure the user location privacy and security; at the same time, the use of live body biological characteristic information for information authentication may improve the accuracy of information authentication, with good practicability to alleviate the technical problems of poor practicability and poor convenience of existing information authentication methods.

The above content briefly introduces a method of near-field information authentication of this application, and the specific content involved in it is introduced in detail below.

The following uses a specific embodiment to introduce in detail the near-field information authentication method of the present application:
When the object to be authenticated wants to use the near-field information authentication method of this application, it first performs a registration. The specific process is as follows:
(1) Receiving the registration instruction sent by the user terminal of the object to be authenticated, where the registration instruction carries the user account of the object to be authenticated;
   Normally, the object to be authenticated needs to download the corresponding software, install and open the software, and then enter the user account, password and mobile phone number of the object to be authenticated in the registration interface, click the register button, and send the registration instruction to the server.
(2) Sending prompt information to the user terminal of the object to be authenticated to prompt the object to be authenticated to upload identity information, where the identity information includes the biological characteristic information of the object to be authenticated;
   Specifically, the biological characteristic information may be information such as a static image, an image taken on site, and an image of a human face taken on site. In addition, in order to prevent criminals from impersonating the biological characteristic information of other users, it is also necessary to upload information such as the name or identification number of the object to be authenticated.
(3) Receiving the identity information uploaded by the object to be authenticated through its user terminal, and verifying whether the identity information is legal;
   Specifically, the above-mentioned identity information can be passed to the relevant authentication department to verify whether the basic information of the object to be authenticated (for example, name and identification number etc.) matches the biological characteristic information. When it is determined that the basic information matches the biological characteristic information, it can be determined that the identity information of the object to be authenticated is legal.
(4) If it is legal, saving the biological characteristic information of the object to be authenticated and the user account of the object to be authenticated, and completing the registration.

Specifically, after the registration is completed, the object to be authenticated may further bind its user account to its payment account (which may be a bank card number, WeChat account, and Alipay account etc.) to facilitate later payments.

When a merchant wants to use the near-field information authentication method of this application, it also performs registration. The process is briefly described below: the merchant needs to download the corresponding administrator software, install and open the software, then enter the merchant name in the registration interface, bind the address information, click the registration button, and send the registration instruction to the server; then, the server verifies the registration instruction, and after passing, the merchant registration is completed; after the registration is completed, the service terminal required in the merchant is initialized, and the service terminal is bound to the merchant; further, the service terminal displays a QR code (containing the merchant information) after the program is installed, so that the user terminal of the object to be authenticated scans the QR code, thereby completing the authorization of the object to be authenticated to the merchant.

In addition, after the merchant registration is completed, a merchant object will be created in the grid area to which the merchant belongs, and the server will establish a relationship table between the serial numbers of all service terminals in the merchant and the merchant (that is, the second relationship table in this application). When there is a newly added service terminal in the merchant, the information of the service terminal sent by the newly added service terminal is obtained (specifically, when the newly added service terminal is turned on, the information of the service terminal will be sent), wherein the information of the service terminal including: the sub-merchant to which the service terminal belongs, the number of the service terminal, and the location of the service terminal (the location information can be sent by the service terminal regularly, because the location of some service terminals changes, such as the credit card machine on a bus, so , It needs to be sent regularly, so that the grid area to which the service terminal belongs can be determined in real time); a second relationship table between the numbers of the sub-merchants and the service terminal is established in the grid area corresponding to the sub-merchant to which the service terminal belongs according to the information of the service terminal. It should be noted that if there is a service terminal corresponding to the number in the shutdown state among the service terminal numbers recorded in the second relationship table, then the number of the service terminal corresponding to the shutdown service terminal will also be deleted in the second relationship table, that is, the second relational table is also dynamically changing.

When the object to be authenticated wants to authorize a merchant, there are two ways to implement it:
The first type: the object to be authenticated scans the above-mentioned QR code through the software on its user terminal. After the scan is completed, select the near-field function. The user terminal of the object to be authenticated will generate a merchant authorization request and send the merchant authorization request to the server. In this way, the server can complete the authorization of the merchant corresponding to the merchant authorization request by the object to be authenticated based on the merchant authorization request, and the server will send the location information of each sub-merchant of the merchant corresponding to the merchant authorization request to the user terminal of the object to be authenticated.

The second type: the object to be authenticated searches the listed merchant names on the software of its user terminal (searching for names, searching near a fixed location on the map etc.), selects a merchant, and sets the near-field function for the merchant, and the user terminal of the object to be authenticated will generate a merchant authorization request and send the merchant authorization request to the server. In this way, the server can complete the authorization of the object to be authenticated to the merchant corresponding to the merchant authorization request based on the merchant authorization request, and the server sends the location information of each sub-merchant of the merchant corresponding to the merchant authorization request to the user terminal of the object to be authenticated.

The authorization process for the server as the execution body of this process is: obtaining a merchant authorization request sent by the object to be authenticated through its user terminal, wherein the merchant authorization request is a request generated after the object to be authenticated has set the near-field function to the merchant on its user terminal, and the merchant authorization request carries the information of the merchant; based on the merchant authorization request, completing the authorization of the object to be authenticated to the merchant corresponding to the merchant authorization request; and obtaining the location information of all sub-merchants of the merchant.

After completing the above-mentioned user authorization to the merchant, the server determines the authorized merchant of the object to be authenticated, wherein the authorized merchant is the merchant after the object to be authenticated has authorized the merchant through its user terminal, and the authorized merchant includes at least one authorized sub-merchant; The location information of each authorized sub-merchant is sent to the user terminal of the object to be authenticated, so that the user terminal of the object to be authenticated can determine whether the location information of its location and the location information of each authorized sub-merchant are within the preset range; When the user terminal determines that the location information of its location and the location information of one or more authorized sub-merchants are within the preset range, the user terminal of the object to be authenticated sends its current location to the server, then the server obtains the current location information of the user terminal, and use the current location information of the user terminal as the current location information of the object to be authenticated; when the user terminal of the object to be authenticated determines that the location information of its location is not within the preset range of the location information of any authorized sub-merchant, the user terminal of the object to be authenticated does not send its current location to the server, which can greatly ensure the privacy of the user's location and make it more secure.

In addition, it should be noted that when determining the authorized merchant of the object to be authenticated, the authorized merchant of the object to be authenticated may be searched in the service cloud, and then the location information of each authorized sub-merchant of all authorized merchants of the object to be authenticated is sent to the user terminal of the object to be authenticated; it can also be that when the user terminal of the object to be authenticated sends its current location, it also sends the information of authorized merchants within the preset range of its location to the server, so that the server does not need to find all the authorized merchants of the object to be authenticated, and there is no need to send the location information of each authorized sub-merchant of all authorized merchants to the user terminal of the object to be authenticated. Only the location information of each sub-merchant of the authorized merchant corresponding to the information of the authorized merchant sent by the user terminal is sent to the user terminal of the object to be authenticated. Such an implementation can reduce the operating resources of the server, reduce the amount of calculation, and reduce the amount of information transmission. The current embodiments of the present application do not specifically limit the foregoing two implementation manners. The former manner may be implemented or the latter manner may be implemented, and both implementation manners are within the protection scope of the present application.

In addition, one user terminal may correspond to one user account, and one user terminal may also correspond to multiple user accounts at the same time, which is not specifically limited in the embodiments of the present application.

After the server obtains the current location information of the object to be authenticated, it establishes the relationship between the authorized sub-merchant of the object to be authenticated and the user account of the object to be authenticated in the first relationship table, that is, the binding relationship between the authorized sub-merchant (merchant authorized for the object to be authenticated) and the user account of the object to be authenticated is added to the first relationship table (this is an extension of the first relationship table).

The following describes the reduction process of the first relationship table:
One way is: receiving the information of leaving the preset range sent by the user terminal of the object to be authenticated; and deleting the record information about the user account of the object to be authenticated in the first relationship table according to the information of leaving the preset range.

Another way is: if the current location information of the user terminal of the object to be authenticated is not obtained within the preset time, and the record information of the user account of the object to be authenticated exists in the first relationship table, then, deleting the record information about the user account of the object to be authenticated in the first relationship table.

Specifically, because when an object to be authenticated is within the preset range of its authorized merchant, the user terminal of the object to be authenticated will periodically send its current location information to the server. If the current location information of the object to be authenticated is not obtained within the preset time, then it is determined that the user terminal of the object to be authenticated is in a shutdown state or the user has left the aforementioned preset range. At this time, the record information about the user account of the object to be authenticated in the first relationship table will be deleted to further protect the privacy of the user's location and be more secure, while also saving the resources occupied by the server.

In addition, when the object to be authenticated goes from a preset range that includes its authorized merchants to another preset range that includes its authorized merchants, then the record information of the user account of the object to be authenticated in the grid area corresponding to the first preset range will be deleted, and establishing the relationship between the user account of the object to be authenticated and its authorized merchant in the grid area corresponding to the second preset range.

When the object to be authenticated needs to perform information authentication, it will collect the live biological characteristic information of the object to be authenticated through the target service terminal, then send it to the server. The server receives the information that carries the information of the target service terminal and the live biological characteristic information of the object to be authenticated. After the information authentication request, the effective user of the target service terminal is determined in the first relationship table of the target grid area according to the information of the target service terminal. Referring to Figure 2, it specifically comprises the following steps:
Step S201: obtaining the first relationship table of the target grid area;
   Specifically, there may be multiple merchants in the target grid area, and the first relationship table in the target grid area has relationships between multiple merchants and their own user accounts.
Step S202: determining a first target relationship table of the authorized sub-merchant to which the target service terminal belongs in the first relationship table in the target grid area;
Step S203: obtaining the user account included in the first target relationship table, and using the user account included in the first target relationship table as a valid user account;
Step S204: using a user corresponding to the valid user account as the valid user of the target service terminal.

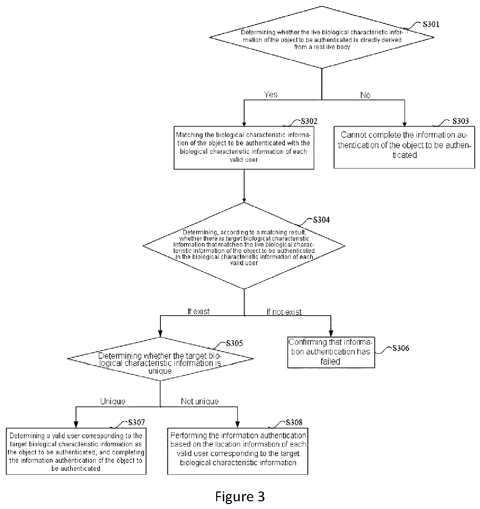

After obtaining the valid users of the target service terminal, the biological characteristic information of each valid user (including the biological characteristic information registered during registration) is further determined, then, according to the live body biological characteristic information of the object to be authenticated and the biological characteristic information of each valid user, completing the identity authentication of the object to be authenticated. Referring to Figure 3, it specifically comprises the following steps:
Step S301: determining whether the live biological characteristic information of the object to be authenticated is directly derived from a real live body;

When performing information authentication, first determining whether the live biological characteristic of the object to be authenticated is directly derived from a real live body, so as to further prevent others from impersonating their identity through photos and videos. The embodiment of this application authenticates the information of the object to be authenticated through live biological characteristic information of the object to be authenticated. The object to be authenticated does not need to provide information such as passwords, QR codes or identification documents, which can effectively simplify the process of information authentication and improve the experience of the object to be authenticated when performing information authentication; in addition, because the object to be authenticated does not need to provide the above information, it can reduce the risk of fraudulent use of passwords and QR codes and loss of identification documents, and further improve the security of information authentication.

By further design, when the live biological characteristic information is live facial characteristic information, it can be combined with the facial gesture recognition technology to further prevent the user from identity or even the funds being stolen and scanned without precaution.

Step S302: if yes, matching the biological characteristic information of the object to be authenticated with the biological characteristic information of each valid user;
Specifically, the live biological characteristic information of the object to be authenticated is matched with the biological characteristic information of each valid user one by one to obtain a matching result.

Step S303: if not, cannot complete the information authentication of the object to be authenticated.

Specifically, if the live body recognition algorithm is set on the service terminal, the service terminal does not send a service request; if the live body recognition algorithm is set on the server, the server sends information that the user cannot be found to the service terminal at this time.

Step S304: determining, according to a matching result, whether there is target biological characteristic information that matches the live biological characteristic information of the object to be authenticated in the biological characteristic information of each valid user;
In an embodiment of the present application, when the similarity threshold between the biological characteristic information of any valid user and the live biological characteristic information of the object to be authenticated is higher than the preset threshold, it is determined that the biological characteristic information of the valid user matches the live biological characteristic information of the object to be authenticated.

For example, the biological characteristic information of the object to be authenticated H is matched with the biological characteristic information of the effective user E, the biological characteristic information of the effective user F, and the biological characteristic information of the effective user G. the similarity between the biological characteristic information of the valid user E, the biological characteristic information of the valid user F, and the biological characteristic information of the valid user G and the biological characteristic information of the object to be authenticated H is calculated, and the similarity value between the biological characteristic information of the valid user E and the biological characteristic information of the object to be authenticated H is obtained to be 70%, the similarity value between the biological characteristic information of the valid user F and the biological characteristic information of the object to be authenticated H to be 80%, and the similarity value between the biological characteristic information of the valid user G and the biological characteristic information of the object to be authenticated H to be 95%.
Case 1: If the preset threshold is 90%, only the similarity between the biological characteristic information of the valid user G and the biological characteristic information of the object to be authenticated H meets the requirements, then the biological characteristic information of the valid user G is determined as the target biological characteristic information;
Case 2: If the preset threshold is 98%, there is no target biological characteristic information matching the biological characteristic information of the object to be authenticated H in the biological characteristic information of the valid user, and the information authentication fails this time, and the server sends the authentication failure information to the service terminal;
Case 3: If the preset threshold is 75%, the similarity between the biological characteristic information of the valid user F and the biological characteristic information of the object to be authenticated H meets the requirements, and the similarity between the biological characteristic information of the valid user G and the biological characteristic information of the object to be authenticated H meets the requirements, then the biological characteristic information of the effective user F and the biological characteristic information of the effective user G are determined as the target biological characteristic information.

Step S305: if it exists, determining whether the target biological characteristic information is unique.

Step S306: if it does not exist, confirming that the information authentication has failed.

Step S307: if it is unique, determining a valid user corresponding to the target biological characteristic information as the object to be authenticated, and completing the information authentication of the object to be authenticated.

Step S308: if it is not unique, performing the information authentication based on the location information of each valid user corresponding to the target biological characteristic information.

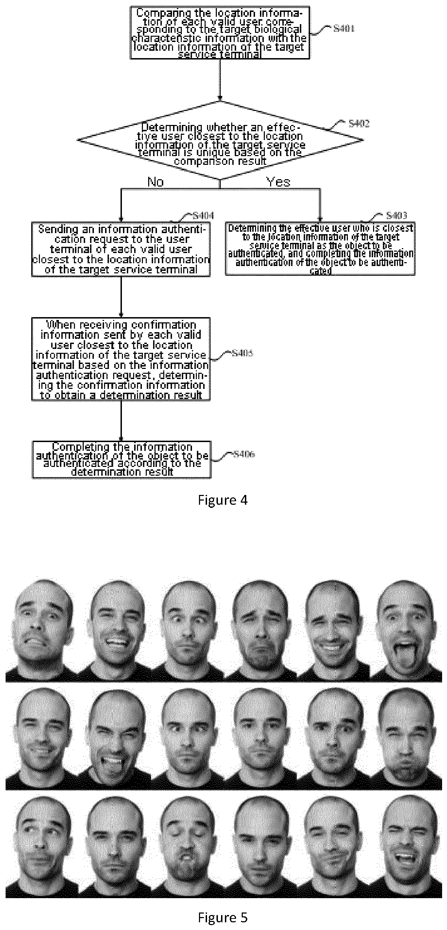

Specifically, when the biological characteristic information of multiple valid users matches the live biological characteristic information of the object to be authenticated (that is, there are multiple target biological characteristic information), further information authentication is required (such as the Case 3 in step S304 above). Specifically, information authentication is performed based on the location information of each valid user corresponding to the target biological characteristic information. Referring to Figure 4, the specific process is as follows:
Step S401: comparing the location information of each valid user corresponding to the target biological characteristic information with the location information of the target service terminal;

As in the Case 3 in step S304 above, when the target biological characteristic information is the biological characteristic information of the effective user F and the biological characteristic information of the effective user G, the location information of the effective user F is further compared with the location information of the target service terminal, and the location information of the effective user G is compared with the location information of the target service terminal to obtain a comparison result.

Step S402: determining whether an effective user closest to the location information of the target service terminal is unique based on the comparison result;

Specifically, as described in step S401, if the effective user F and the effective user G are judged to be the effective user closest to the location information of the target service terminal.

For example, Case 1: After comparison, it is obtained that the distance between the effective user F and the target service terminal is 2 meters, and the distance between the effective user G and the target service terminal is 50 meters, then the effective user closest to the location information of the target service terminal is the effective user F;

Case 2: After comparison, the distance between the effective user F and the target service terminal is 3 meters, and the distance between the effective user G and the target service terminal is 3 meters (or the difference from 3 meters is within the preset distance range), then there are two effective users that are closest to the location information of the target service terminal, one is the effective user F, and the other is the effective user G.

Step S403: if it is unique, determining the effective user who is closest to the location information of the target service terminal as the object to be authenticated, and completing the information authentication of the object to be authenticated.

If the effective user closest to the location information of the target service terminal determined in step S402 is unique, the effective user closest to the location information of the target service terminal is determined as the object to be authenticated, and the information authentication of the object to be authenticated is completed. As in Case 1 in step S402, the valid user F is the object to be authenticated.

Step S404: if it is not unique, sending an information authentication request to the user terminal of each valid user closest to the location information of the target service terminal;

If the effective user with the closest distance to the location information of the target service terminal determined in step S402 is not unique, an information authentication request is sent to the user terminal of each effective user with the closest distance to the location information of the target service terminal. As in the Case 2 in step S402, the information authentication request is sent to the user terminal of the valid user F and the user terminal of the valid user G respectively;

The information authentication request may be requesting the user to press the confirmation button, requesting the user to enter a confirmation code, and/or requesting to collect other biological characteristic information of the user, and so on.

Step S405: when receiving confirmation information sent by each valid user closest to the location information of the target service terminal based on the information authentication request, determining the confirmation information to obtain a determination result;

Specifically, the determination result may be that the confirmation information is wrong or the confirmation information is correct.

Step S406: completing the information authentication of the object to be authenticated according to the determination result.

Specifically, when the determination result is that the confirmation information is correct, it is determined that the confirmation information returned by the user terminal matches the information of the object to be authenticated, and the user corresponding to the user terminal is confirmed as the object to be authenticated, and the information authentication of the object to be authenticated is completed.; if the determination result is that the confirmation information is wrong, it is determined that the confirmation information returned by the user terminal does not match the information of the object to be authenticated, and the user corresponding to the user terminal is not the object to be authenticated.

In addition, when the information authentication is payment information authentication, the information authentication result is the payment information authentication result, and the payment information authentication result contains the user account of the object to be authenticated; after completing the information authentication of the object to be authenticated, the method further comprises: sending the payment information authentication result and service request to the payment system so that the payment system can find the payment account corresponding to the user account in the payment information authentication result, completing the payment operation based on the payment account and service request; generating an invoice service request based on the information for completing the payment operation, sending the invoice service request to the invoice system so that the invoice system can generate an electronic payment invoice according to the invoice service request, and sending the electronic payment invoice to the email address designated by the user or to the target service terminal. Specifically, this situation is a process that is only performed when the service request requires payment, and when the service request does not require payment, the process is not performed. Such an implementation method integrates identity authentication (specifically to obtain the user account of the object to be authenticated) and mobile payment operations together, in a variety of occasions where payment operations are required (for example, occasions such as handling high-speed rail station ticket purchases and hotel check-in etc.), which can reduce the tedious operation of multiple authentications.

When the information authentication is identity information authentication, the information authentication result is the identity information authentication result, and the identity information authentication result contains the user account of the object to be authenticated; after completing the information authentication of the object to be authenticated, the method further comprises: sending the identity information authentication result and a service request to an identity authentication system, so that the identity authentication system converts the user account in the identity information authentication result into personal identity information, and completing the identity information authentication according to the personal identity information and the service request.

Preferably, when the biological characteristic information of the object to be authenticated is facial biological characteristic information, the facial biological characteristic information is biological characteristic information of a live human face of the object to be authenticated, and the biological characteristic information of the live human face comprises any one of the following form: the biological characteristic information of the live human face comprises expression information of the object to be authenticated, the biological characteristic information of the live human face does not comprise the expression information of the object to be authenticated.

It should be noted that in order to improve the operating efficiency and response speed of the grid service cloud, the above step S108 and its specific process (step S301 to step S307 and step S401 to step S406) can be completed in the biological characteristic authentication service cloud, then the process of biological characteristic information authentication is independent from the grid service cloud, which can reduce the calculation amount of the grid service cloud and enable the system to execute smoothly.

In the embodiments of the present application, in order to improve the accuracy of information authentication, biological characteristic information of a live human face is used for information authentication, and the biological characteristic information of a live human face may comprise the facial expression information of the object to be authenticated, or may not comprise the facial expression information of the object to be authenticated.

When the biological characteristic information of a live human face contains the facial expression information of the object to be authenticated, the combination of a live human face recognition technology and the facial gesture recognition technology is used to obtain the biological characteristic information of the a live human face containing the facial expression information of the object to be authenticated, wherein, the live human face recognition technology comprises live body recognition technology and face recognition technology. Firstly, it is determined whether the face information of the object to be authenticated is the biological feature information of the face of a live human face through the live body recognition technology, then uses face recognition technology to match the user corresponding to the object to be authenticated, then the facial expressions are matched by facial gesture recognition technology, and the information authentication of the object to be authenticated is completed according to the matching result.

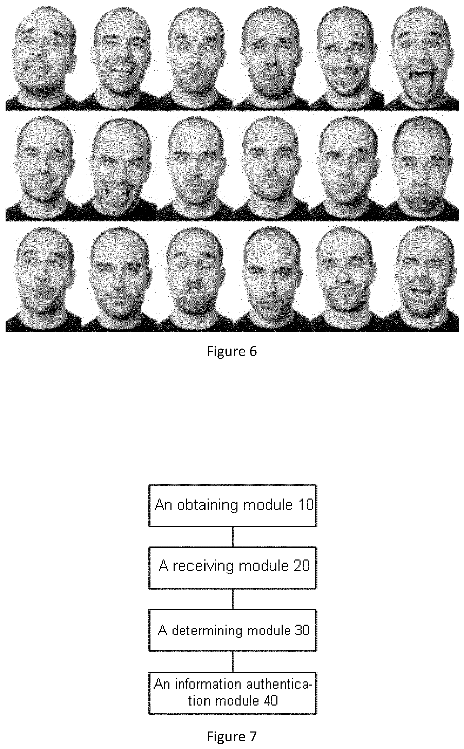

As shown in Figure 5, in an illustrative diagram of facial expressions, the system extracts the feature points of the facial expressions of the object to be authenticated based on the expression of the object to be authenticated, see Figure 6 for an illustrative diagram of facial expression feature points. Specifically, during face pose authentication, it is determined whether the face poses are the same or similar based on the similarity of the positions of the facial expression features, so as to prevent the identity of people with the same appearance from fraudulent use.

The embodiment of the application combines live face recognition technology and facial gesture recognition technology to prevent others from impersonating users with cell phone images, videos, photos, masks, and 3D (3 Dimensions) print heads; it can further reduce the risk of funds being stolen by others without protection, and it can also effectively distinguish two or more similar users; it can greatly prevent the risk of fraudulent use of identities without the will of the person; and it can effectively prevent the identity confusion of twins and other similar-looking people.

Further, the user can also set an alarm expression. When the user is in duress to transfer assets, the alarm expression can be used when collecting facial information and the system can implement an alarm operation based on the alarm expression, thereby improving the user's personal safety and property safety.

The method for near-field information authentication in this application is introduced below with an example in use:
A certain zoo has four entrances in the north, south, east and west. When the object to be authenticated chooses to set up the near-field function for this park, it means that the object to be authenticated has authorized the zoo. The server will return the location information of the four entrances in the north, south, east and west of the zoo to the user terminal of the object to be authenticated (which can be regarded as the 4 authorized sub-merchants of this application, assuming that the zoo is relatively large and the four entrances are in different grid areas).

When the object to be authenticated is far away from the four entrances (outside the zoo, or in the center of the zoo, that is, not in the grid area of these four entrances), the user terminal only reads the location information of the object to be authenticated, but it does not send its location information to the server.

When the object to be authenticated approaches one of the four entrances (that is, when it enters the grid area of one of the entrances), the user terminal sends its current location information to the server.

After receiving the current location information sent by the user terminal, the server creates the object to be authenticated in the grid area corresponding to the entrance close to the object to be authenticated, and establish the relationship table between the entry and the user account of the object to be authenticated (that is, the authorized sub-merchant in this application).

When the object to be authenticated arrives at the gate of the entrance, he/she can directly scan his face to enter the zoo.

In summary, the embodiments of this application can achieve at least one of the following features:
(1) Good accuracy. The embodiments of this application relies on the existing high-precision biological characteristics recognition technology, and through near-field authorization and grid technology to reduce the number of biological characteristics that need to be retrieved, to ensure the accuracy of the comparison (that is, the way in which the object to be authenticated authorizes the merchant) to ensure the accuracy of the comparison and prevent disputes caused by wrong determination;
(2) Fast speed and low cost. Due to the near-field authorization and grid technology, the number of biological characteristics that need to be retrieved is reduced, the comparison speed is improved, the comparison can be achieved in milliseconds, the equipment investment is reduced, and the input cost and maintenance difficulty are reduced;
(3) Simple and convenient, good experience. When the only valid user is matched in the system, there is no need for the object to be authenticated to take out the mobile phone, and only rely on scanning biological characteristics for identification, which reduces the operation steps and is simpler, more convenient and faster;
(4) Prevent fraudulent use of remote identity. Since the accuracy of AGPS is up to 2 kilometers, and the accuracy of GPS can be 10 meters, the effective range can be controlled within a radius of 3 kilometers through AGPS, and the effective range can be controlled within a radius of 15 meters when using GPS, which can effectively prevent criminals outside the effective range from fraudulently using user information, and avoid a large number of illegal activities of fraudulent use of information;
(5) Protect user location privacy. The object to be authenticated will only send its location information to the server when it enters the preset range of authorized sub-merchants, thereby protecting the privacy and security of the user's location;
(6) Assist the police in solving cases quickly. In the event of forced transfer of assets and pursuit of escape, users can be found in the shortest time through merchant location information or user location information, and the cases can be solved quickly;
(7) Prevent fraudulent use of identity. Using live body biotechnology can prevent identity from being counterfeited. Taking human faces as an example, using live body human face recognition technology can prevent others from impersonating users with mobile phone images, videos, photos, masks, and 3D (3 Dimensions) printing heads;
(8) Prevent theft of funds. When the biological characteristic used is face recognition, the facial gesture recognition technology can be used together. Unless the object to be authenticated consciously makes the facial expression bound to the authentication operation and is collected, the mobile payment action of the object to be authenticated cannot be performed , and can effectively prevent the object to be authenticated from being fraudulently used and stolen funds under normal conditions, sleep, drunkenness, coma, or death etc.;
(9) Effectively prevent the identity confusion of twins. Using facial gesture recognition technology, since everyone can customize their own authentication expressions according to their personal preferences, even though they look similar, the authentication expressions are not the same. Therefore, it can further effectively prevent the identity confusion of twins and other similar people;
(10) Ensure the safety of account funds. When a mobile phone is lost or the mobile phone number is obtained by others, due to the combined use of live biological characteristic recognition technology, even combined with live body facial gesture recognition technology, unless one personally operates it, it will not be able to perform information authentication operations, so as to better ensure the account identity information security;
(11) Two in one is simpler. The integration of identity authentication and near-field payment can reduce the tedious operation of multiple authentications.

### Embodiment 2:

The embodiment of the present application also provides a device for near-field information authentication. The device for near-field information authentication is mainly configured to execute the method for near-field information authentication provided by the above-mentioned content in the embodiments of this application. The device for near-field information authentication provided in the embodiments of the present application will be specifically introduced below.

Figure 7 is an illustrative diagram of a device for near-field information authentication according to an embodiment of the present application. As shown in Figure 7, the device for near-field information authentication mainly comprises an obtaining module 10, a receiving module 20, a determining module 30, and an information authentication module 40, of which:
an obtaining module configured to obtain a current location information of an object to be authenticated, then determining a target grid area where the object to be authenticated is located, wherein when the object to be authenticated is within a preset range of its authorized merchants, a user terminal of the object to be authenticated periodically sends the current location information of the object to be authenticated to the server;
a receiving module configured to receive an information authentication request sent by a target service terminal in the target grid area, wherein the information authentication request carries information of the target service terminal and live biological characteristic information of the object to be authenticated; the information of the target service terminal comprises: authorized sub-merchants to which the target service terminal belongs, a number of the target service terminal and a location information of the target service terminal, the target service terminal is a service terminal that performs information authentication on the object to be authenticated;
a determining module configured to determine effective users of the target service terminal in a first relationship table of the target grid area according to the information of the target service terminal, and determining biological characteristic information of each valid user; the first relationship table is a relationship table between user accounts of authorized merchants and their valid users in the target grid area, and the first relationship table is a dynamically changing relationship table;
an information authentication module configured to, according to the live biological characteristic information of the object to be authenticated and the biological characteristic information of each valid user, complete the information authentication of the object to be authenticated, and obtaining an information authentication result.

In one embodiment of the present application, first obtaining the current location information of the object to be authenticated, then determining the target grid area where the object to be authenticated is located; then, receiving the information authentication request sent by the target service terminal in the target grid area; further, determining the effective user of the target service terminal in the first relationship table in the target grid area according to the information of the target service terminal, and determining the biological characteristic information of each valid user; finally, according to the live body biological characteristic information of the object to be authenticated and each valid user, completing the information authentication of the object to be authenticated to obtain the information authentication result From the above description, it can be seen that in this embodiment, when information authentication is performed on the object to be authenticated, it is achieved through the biological information of the object to be authenticated, and the user does not need to provide a physical identification card, simplifying the information authentication process, and improving the user experience of the user when performing information authentication; in addition, only when the object to be authenticated is within the preset range of its authorized merchant, the current location information of the object to be authenticated is sent to the server to ensure the user location privacy and security; at the same time, the use of live body biological characteristic information for information authentication may improve the accuracy of information authentication, with good practicability to alleviate the technical problems of poor practicability and poor convenience of existing information authentication methods.

Optionally, the device is further configured for: determining the authorized merchants of the object to be authenticated, wherein the authorized merchants are merchants after the object to be authenticated performs an authorized operation on the merchants through its user terminal, the authorized merchants comprises at least one authorized sub-merchant; sending location information of each authorized sub-merchant to the user terminal of the object to be authenticated, so that the user terminal of the object to be authenticated determines whether the location information of its location and the location information of each authorized sub-merchant are within the preset range; when the user terminal of the object to be authenticated determines that the location information of its location and the location information of the authorized sub-merchants are within the preset range, obtaining a current location information of the user terminal, and using the current location information of the user terminal as the current location information of the object to be authenticated.

Optionally, the device is further configured for establishing a relationship between the authorized sub-merchant of the object to be authenticated and the user account of the object to be authenticated in the first relationship table.

Optionally, the determining module is further configured for: obtaining the first relationship table of the target grid area; determining a first target relationship table of the authorized sub-merchant to which the target service terminal belongs in the first relationship table in the target grid area; obtaining the user account included in the first target relationship table, and using the user account included in the first target relationship table as a valid user account; using a user corresponding to the valid user account as the valid user of the target service terminal.

Optionally, the information authentication module is further configured for: determining whether the live biological characteristic information of the object to be authenticated is directly derived from a real live body; if yes, matching the biological characteristic information of the object to be authenticated with the biological characteristic information of each valid user; determining, according to a matching result, whether there is target biological characteristic information that matches the live biological characteristic information of the object to be authenticated in the biological characteristic information of each valid user; if it exists, determining whether the target biological characteristic information is unique; if it is unique, determining a valid user corresponding to the target biological characteristic information as the object to be authenticated, and completing the information authentication of the object to be authenticated.

Optionally, the information authentication module is further configured for: if it is not unique, performing the information authentication based on the location information of each valid user corresponding to the target biological characteristic information.

Optionally, the information authentication module is further configured for: comparing the location information of each valid user corresponding to the target biological characteristic information with the location information of the target service terminal; determining whether an effective user closest to the location information of the target service terminal is unique based on the comparison result; if it is unique, determining the effective user who is closest to the location information of the target service terminal as the object to be authenticated, and completing the information authentication of the object to be authenticated.

Optionally, the information authentication module is further configured to: if it is not unique, sending an information authentication request to the user terminal of each valid user closest to the location information of the target service terminal; when receiving confirmation information sent by each valid user closest to the location information of the target service terminal based on the information authentication request, determining the confirmation information to obtain a determination result; completing the information authentication of the object to be authenticated according to the determination result.

Optionally, when the information authentication is a payment information authentication, the information authentication result is a payment information authentication result, and the payment information authentication result comprises a user account of the object to be authenticated; the device is further configured for sending the payment information authentication result and a service request to a payment system, so that the payment system searches for a payment account corresponding to the user account in the payment information authentication result, and completing a payment operation based on the payment account and the service request; generating an invoice service request according to information of completing the payment operation, and sending the invoice service request to an invoice system, so that the invoice system generates an electronic payment invoice according to the invoice service request, and sending the electronic payment invoice to a user designated email address or to the target service terminal.

Optionally, when the information authentication is an identity information authentication, the information authentication result is an identity information authentication result, and the identity information authentication result comprises a user account of the object to be authenticated; the device is further configured for sending the identity information authentication result and a service request to an identity authentication system, so that the identity authentication system converts the user account in the identity information authentication result into personal identity information, and completing the identity information authentication according to the personal identity information and the service request.

Optionally, the device is further configured for: obtaining a merchant authorization request sent by the object to be authenticated through its user terminal, wherein the merchant authorization request is a request generated by the object to be authenticated after setting a near-field function for the merchant on its user terminal, and the merchant authorization request carries the merchant information; based on the merchant authorization request, completing an authorization of the merchant corresponding to the merchant authorization request by the object to be authenticated; and obtaining location information of all sub-merchants of the merchant.

Optionally, the device is further configured for: receiving information of leaving the preset range sent by the user terminal of the object to be authenticated; deleting record information about the user account of the object to be authenticated in the first relationship table according to the information of leaving the preset range.

Optionally, the device is further configured for: if the current location information of the user terminal of the object to be authenticated is not obtained within the preset time, and record information of the user account of the object to be authenticated exists in the first relationship table, then deleting the record information of the user account of the object to be authenticated in the first relationship table.

Optionally, the device is further configured for: obtaining information of the service terminal sent by the service terminal, wherein the information of the service terminal comprises: the sub-merchant to which the service terminal belongs, the number of the service terminal, and the location of the service terminal; establishing a second relationship table between serial numbers of the sub-merchant and the service terminal in a grid area corresponding to the sub-merchant to which the service terminal belongs according to the information of the service terminal, and the second relationship table is a dynamically changing relationship table.

Optionally, the device is further configured for: when the biological characteristic information of the object to be authenticated is facial biological characteristic information, the facial biological characteristic information is biological characteristic information of a live human face of the object to be authenticated, and the biological characteristic information of the live human face comprises any one of the following form: the biological characteristic information of the live human face comprises expression information of the object to be authenticated, the biological characteristic information of the live human face does not comprise the expression information of the object to be authenticated.

The implementation principles and technical effects of the device provided in the embodiments of the application are the same as those of the foregoing method embodiments. For a brief description, for the parts not mentioned in the device embodiments, please refer to the corresponding content in the foregoing method embodiments.

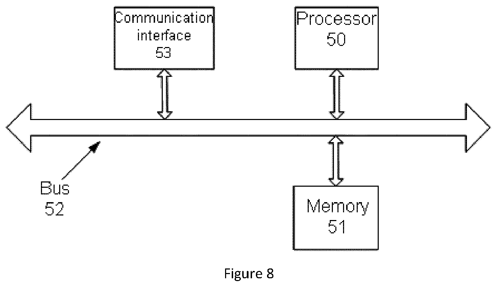

An embodiment of the present application provides an electronic device. Referring to Figure 8, the electronic device comprises: a processor 50, a memory 51, a bus 52, and a communication interface 53; the processor 50, the communication interface 53, and the memory 51 are connected by the bus 52; the processor 50 is configured to execute an executable module stored in the memory 51, such as a computer program. The processor implements the steps of the method described in the method embodiments when the processor executes the computer program.

The memory 51 may include a high-speed random access memory (RAM), and may also include a non-volatile memory, such as at least one disk memory. The communication connection between the network element of the system and at least one other network element is realized through at least one communication interface 53 (which may be wired or wireless), and the Internet, a wide area network, a local network, a metropolitan area network etc. may be used.

The bus 52 may be an ISA bus, a PCI bus, an EISA bus etc. The bus can be divided into address bus, data bus and control bus. For ease of presentation, only one bidirectional arrow is used in Figure 8, but it does not mean that there is only one bus or one type of bus.

Wherein the memory 51 is configured to store a program, and the processor 50 executes the program after receiving an execution instruction. The method executed by the flow process defined apparatus disclosed in any of the foregoing embodiments of the present application can be applied to the processor 50 or realized by the processor 50.

The processor 50 may be an integrated circuit chip with signal processing capabilities. In the implementation process, the steps of the foregoing method may be completed by an integrated logic circuit of hardware in the processor 50 or instructions in the form of software. The aforementioned processor 50 may be a general-purpose processor, including a central processing unit (CPU for short), a network processor (NP) etc.; it may also be a digital signal processor (DSP for short), Application Specific Integrated Circuit (ASIC for short), Field-Programmable Gate Array (FPGA) or other programmable logic devices, discrete gates or transistor logic devices, and discrete hardware components. The methods, steps, and logical block diagrams disclosed in the embodiments of the present application can be implemented or executed. The general-purpose processor may be a microprocessor or the processor may also be any conventional processor etc. The steps of the method disclosed in the embodiments of the present application may be directly embodied as being executed by a hardware decoding processor or by a combination of hardware and software modules in the decoding processor. The software module can be located in random access memory, flash memory and/or read-only memory, programmable read-only memory or electrically erasable programmable memory and/or registers and other mature storage media in the field. The storage medium is located in the memory 51, and the processor 50 reads the information in the memory 51, and completes the steps of the above method in combination with its hardware.

In another embodiment, there is also provided a computer-readable medium having non-volatile program code executable by a processor, and the program code causes the processor to execute the steps of the method described in the Embodiment 1 above.

In addition, in the description of the embodiments of the present application, unless otherwise clearly specified and limited, the terms "installed", "connected" and "linked" should be understood in a broad sense. For example, they may be fixed or detachable connections, or integrally connected; it can be a mechanical connection or an electrical connection; it can be directly connected or indirectly connected through an intermediate medium, and it can be the internal communication between two components. For those of ordinary skill in the art, the specific meaning of the above-mentioned terms in this application can be understood under specific circumstances.

In the description of this application, it should be noted that the terms "center", "upper", "lower", "left", "right", "vertical", "horizontal", "inner" and "outer" etc. which indicates orientations or positional relationships are based on the orientations or positional relationships shown in the figures, and is only for the convenience of describing the application and simplifying the description, and does not indicate or imply that the pointed device or element must have a specific orientation or a specific orientation. The structure and operation cannot therefore be understood as a limitation of this application. In addition, the terms "first", "second" and "third" are only used for descriptive purposes, and cannot be understood as indicating or implying relative importance.

Those skilled in the art can clearly understand that for the convenience and conciseness of description, the specific working process of the above-described system, device, and unit can refer to the corresponding process in the foregoing method embodiments, which will not be repeated here.

In the several embodiments provided in this application, it should be understood that the disclosed system, device, and method may be implemented in other ways. The device embodiments described above are merely illustrative. For example, the division of units is only a logical function division, and there may be other divisions in actual implementation. For further example, multiple units or components can be combined or integrated into another system, or some features can be ignored, or not implemented. In addition, the displayed or discussed mutual coupling or direct coupling or communication connection may be indirect coupling or communication connection through some communication interfaces, devices or units, and may be in electrical, mechanical or other forms.

The units described as separate components may or may not be physically separate, and the components displayed as units may or may not be physical units, that is, they may be located in one place or distributed on multiple network units. Some or all of the units may be selected according to actual needs to achieve the objectives of the solutions of the embodiments.

In addition, the functional units in the various embodiments of the present application may be integrated into one processing unit, or each unit may exist alone physically, or two or more units may be integrated into one unit.

If the function is implemented in the form of a software functional unit and sold or used as an independent product, it can be stored in a non-volatile computer readable storage medium executable by a processor. Based on this understanding, the technical solution of the present application essentially or the part that contributes to the existing technology or the part of the technical solution can be embodied in the form of a software product, and the computer software product is stored in a storage medium, including several instructions to make a computer device (which can be a personal computer, a server, or a network device, etc.) execute all or part of the steps of the methods described in the various embodiments of the present application. The aforementioned storage media include: U disk, mobile hard disk, read-only memory (ROM), random access memory (RAM), magnetic disks or optical disks and other media that can store program codes.

Finally, it should be noted that the above-mentioned embodiments are only specific implementations of this application, which are used to illustrate the technical solution of this application, rather than limiting it. The scope of protection of the application is not limited to this, although the application has been described in detail with reference to the foregoing embodiments, and those of ordinary skill in the art should understand that any person skilled in the art familiar with the technical field within the technical scope disclosed in this application may still modify the technical solutions described in the foregoing embodiments or may easily think of changes or equivalently replace some of the technical features. However, these modifications, changes or replacements do not cause the essence of the corresponding technical solutions to deviate from the spirit and scope of the technical solutions of the embodiments of the present application, and should be covered within the protection scope of the present application. Therefore, the protection scope of this application should be subject to the protection scope of the claims.

## Claims

1. A method for a near-field information authentication, **characterized in that**, the method is applied to a server and comprising:
obtaining a current location information of an object to be authenticated, then determining a target grid area where the object to be authenticated is located, wherein when the object to be authenticated is within a preset range of its authorized merchants, a user terminal of the object to be authenticated periodically sends the current location information of the object to be authenticated to the server;
receiving an information authentication request sent by a target service terminal in the target grid area, wherein the information authentication request carries information of the target service terminal and live biological characteristic information of the object to be authenticated; the information of the target service terminal comprises: authorized sub-merchants to which the target service terminal belongs, a number of the target service terminal and a location information of the target service terminal, the target service terminal is a service terminal that performs information authentication on the object to be authenticated;
determining effective users of the target service terminal in a first relationship table of the target grid area according to the information of the target service terminal, and determining biological characteristic information of each valid user; the first relationship table is a relationship table between user accounts of authorized merchants and their valid users in the target grid area, and the first relationship table is a dynamically changing relationship table;
according to the live biological characteristic information of the object to be authenticated and the biological characteristic information of each valid user, completing the information authentication of the object to be authenticated, and obtaining an information authentication result.

2. The method according to claim 1, **characterized in that**, the step of obtaining the current location information of the object to be authenticated comprises:
determining the authorized merchants of the object to be authenticated, wherein the authorized merchants are merchants after the object to be authenticated performs an authorized operation on the merchants through its user terminal, the authorized merchants comprises at least one authorized sub-merchant;
sending location information of each authorized sub-merchant to the user terminal of the object to be authenticated, so that the user terminal of the object to be authenticated determines whether the location information of its location and the location information of each authorized sub-merchant are within the preset range;
when the user terminal of the object to be authenticated determines that the location information of its location and the location information of the authorized sub-merchants are within the preset range, obtaining a current location information of the user terminal, and using the current location information of the user terminal as the current location information of the object to be authenticated.

3. The method according to claim 1, **characterized in that**, after obtaining the current location information of the object to be authenticated, before receiving the information authentication request sent by the target service terminal in the target grid area, the method further comprises:
establishing a relationship between the authorized sub-merchant of the object to be authenticated and the user account of the object to be authenticated in the first relationship table.

4. The method according to claim 1, **characterized in that**, the step of determining the effective users of the target service terminal in the first relationship table of the target grid area according to the information of the target service terminal comprises:
obtaining the first relationship table of the target grid area;
determining a first target relationship table of the authorized sub-merchant to which the target service terminal belongs in the first relationship table in the target grid area;
obtaining the user account included in the first target relationship table, and using the user account included in the first target relationship table as a valid user account;
using a user corresponding to the valid user account as the valid user of the target service terminal.

5. The method according to claim 1, **characterized in that**, the step of, according to the live biological characteristic information of the object to be authenticated and the biological characteristic information of each valid user, completing the information authentication of the object to be authenticated comprises:
determining whether the live biological characteristic information of the object to be authenticated is directly derived from a real live body;
if yes, matching the biological characteristic information of the object to be authenticated with the biological characteristic information of each valid user;
determining, according to a matching result, whether there is target biological characteristic information that matches the live biological characteristic information of the object to be authenticated in the biological characteristic information of each valid user;
if it exists, determining whether the target biological characteristic information is unique;
if it is unique, determining a valid user corresponding to the target biological characteristic information as the object to be authenticated, and completing the information authentication of the object to be authenticated.

6. The method of claim 5, **characterized in that**, the method further comprises:
if it is not unique, performing the information authentication based on the location information of each valid user corresponding to the target biological characteristic information.

7. The method according to claim 6, **characterized in that**, the step of performing the information authentication based on the location information of each valid user corresponding to the target biological characteristic information comprises:
comparing the location information of each valid user corresponding to the target biological characteristic information with the location information of the target service terminal;
determining whether an effective user closest to the location information of the target service terminal is unique based on the comparison result;
if it is unique, determining the effective user who is closest to the location information of the target service terminal as the object to be authenticated, and completing the information authentication of the object to be authenticated.

8. The method of claim 7, **characterized in that**, the method further comprises:
if it is not unique, sending an information authentication request to the user terminal of each valid user closest to the location information of the target service terminal;
when receiving confirmation information sent by each valid user closest to the location information of the target service terminal based on the information authentication request, determining the confirmation information to obtain a determination result;
completing the information authentication of the object to be authenticated according to the determination result.

9. The method of claim 1, **characterized in that**, when the information authentication is a payment information authentication, the information authentication result is a payment information authentication result, and the payment information authentication result comprises a user account of the object to be authenticated; after completing the information authentication of the object to be authenticated, the method further comprises:
sending the payment information authentication result and a service request to a payment system, so that the payment system searches for a payment account corresponding to the user account in the payment information authentication result, and completing a payment operation based on the payment account and the service request;
generating an invoice service request according to information of completing the payment operation, and sending the invoice service request to an invoice system, so that the invoice system generates an electronic payment invoice according to the invoice service request, and sending the electronic payment invoice to a user designated email address or to the target service terminal.

10. The method according to claim 1, **characterized in that**, when the information authentication is an identity information authentication, the information authentication result is an identity information authentication result, and the identity information authentication result comprises a user account of the object to be authenticated; after completing the information authentication of the object to be authenticated, the method further comprises:
sending the identity information authentication result and a service request to an identity authentication system, so that the identity authentication system converts the user account in the identity information authentication result into personal identity information, and completing the identity information authentication according to the personal identity information and the service request.

11. The method according to claim 2, **characterized in that**, before determining the authorized merchant of the object to be authenticated, the method further comprises:
obtaining a merchant authorization request sent by the object to be authenticated through its user terminal, wherein the merchant authorization request is a request generated by the object to be authenticated after setting a near-field function for the merchant on its user terminal, and the merchant authorization request carries the merchant information;
based on the merchant authorization request, completing an authorization of the merchant corresponding to the merchant authorization request by the object to be authenticated; and obtaining location information of all sub-merchants of the merchant.

12. The method of claim 1, **characterized in that**, the method further comprises:
receiving information of leaving the preset range sent by the user terminal of the object to be authenticated;
deleting record information about the user account of the object to be authenticated in the first relationship table according to the information of leaving the preset range.

13. The method according to claim 1, **characterized in that**, the method further comprises:
if the current location information of the user terminal of the object to be authenticated is not obtained within the preset time, and record information of the user account of the object to be authenticated exists in the first relationship table, then deleting the record information of the user account of the object to be authenticated in the first relationship table.

14. The method of claim 1, **characterized in that**, the method further comprises:
obtaining information of the service terminal sent by the service terminal, wherein the information of the service terminal comprises: the sub-merchant to which the service terminal belongs, the number of the service terminal, and the location of the service terminal;
establishing a second relationship table between serial numbers of the sub-merchant and the service terminal in a grid area corresponding to the sub-merchant to which the service terminal belongs according to the information of the service terminal, and the second relationship table is a dynamically changing relationship table.

15. The method of claim 1, **characterized in that**, the method further comprises:
when the biological characteristic information of the object to be authenticated is facial biological characteristic information, the facial biological characteristic information is biological characteristic information of a live human face of the object to be authenticated, and the biological characteristic information of the live human face comprises any one of the following form: the biological characteristic information of the live human face comprises expression information of the object to be authenticated, the biological characteristic information of the live human face does not comprise the expression information of the object to be authenticated.

16. A device for a near-field information authentication, **characterized in that**, the device is applied to a server and comprising:
an obtaining module configured to obtain a current location information of an object to be authenticated, then determining a target grid area where the object to be authenticated is located, wherein when the object to be authenticated is within a preset range of its authorized merchants, a user terminal of the object to be authenticated periodically sends the current location information of the object to be authenticated to the server;
a receiving module configured to receive an information authentication request sent by a target service terminal in the target grid area, wherein the information authentication request carries information of the target service terminal and live biological characteristic information of the object to be authenticated; the information of the target service terminal comprises: authorized sub-merchants to which the target service terminal belongs, a number of the target service terminal and a location information of the target service terminal, the target service terminal is a service terminal that performs information authentication on the object to be authenticated;
a determining module configured to determine effective users of the target service terminal in a first relationship table of the target grid area according to the information of the target service terminal, and determining biological characteristic information of each valid user; the first relationship table is a relationship table between user accounts of authorized merchants and their valid users in the target grid area, and the first relationship table is a dynamically changing relationship table;
an information authentication module configured to, according to the live biological characteristic information of the object to be authenticated and the biological characteristic information of each valid user, complete the information authentication of the object to be authenticated, and obtaining an information authentication result.

17. An electronic device comprising a memory, a processor, and a computer program stored on the memory capable of running on the processor, **characterized in that**, the processor executes the computer program to implement the steps of the method of any one of the preceding claims 1 to 15.

18. A computer-readable medium with non-volatile program code executable by a processor, **characterized in that**, the program code causes the processor to execute the method according to any one of claims 1 to 15.
